# EUROPÄISCHE PATENTSCHRIFT

(11) **EP 4 648 389 B1**
(45) Veröffentlichungstag und Bekanntmachung des Hinweises auf die Patenterteilung: **09.12.2026**
(21) Anmeldenummer: 25174833.1
(22) Anmeldetag: 07.05.2025
(51) Int. Cl.: H04L 67/12, H04L 41/082, H04L 67/00, H04L 12/28

(54) **VERFAHREN ZUM AUFSPIELEN EINER SOFTWARE AUF MINDESTENS EIN GERÄT EINES GEBÄUDEAUTOMATIONSSYSTEMS, SOWIE SYSTEM ZUM AUFSPIELEN EINER SOFTWARE**
METHOD FOR PLAYING SOFTWARE ON AT LEAST ONE DEVICE OF A BUILDING AUTOMATION SYSTEM, AND SYSTEM FOR PLAYING SOFTWARE
PROCÉDÉ D'ENREGISTREMENT D'UN LOGICIEL SUR AU MOINS UN APPAREIL D'UN SYSTÈME D'AUTOMATISATION DE BÂTIMENT, AINSI QUE SYSTÈME D'ENREGISTREMENT D'UN LOGICIEL

(30) Priorität: 07.05.2024 EP 24174640
(43) Veröffentlichungstag der Anmeldung: 12.11.2025
(73) Patentinhaber: GIRA GIERSIEPEN GmbH & Co. KG, 42477 Radevormwald (DE)
(72) Erfinder: Bunte, Matthias, 42477 Radevormwald (DE); Steinbach, Horst, 42499 Hückeswagen (DE)
(74) Vertreter: Angerhausen, Christoph

(56) Entgegenhaltungen:
- US-A1- 2004 218 591
- US-A1- 2008 057 931
- US-A1- 2019 056 924
- US-A1- 2022 229 653

## Beschreibung

Die Erfindung betrifft ein Verfahren zum Aufspielen einer Software auf mindestens ein Gerät eines Gebäudeautomationssystems, beispielsweise eines Türkommunikationssystems. Die Erfindung betrifft zudem ein System.

### Hintergrund

Gebäudeautomationssysteme sind zunehmend in Gebäuden vorgesehen. Üblicherweise werden dabei zahlreiche Geräte unterschiedlicher Typen und Modelle in einem Gebäudeautomationssystem miteinander verbunden, um verschiedentliche Funktionen bereitzustellen, beispielsweise in einem Smart Home. So können Haustechnik, Haushaltsgeräte und/oder auch Unterhaltungselektronik miteinander vernetzt sein.

Derartige Gebäudeautomationssystem haben üblicherweise eine hohe Komplexität und eine Vielzahl von Funktionen, welche durch Software und/oder Firmware gesteuert werden. Um die Funktionalität, Sicherheit und Kompatibilität dieser Systeme zu gewährleisten, ist es dabei regelmäßig erforderlich, Software- oder Firmware-Updates auf die einzelnen Geräte aufzuspielen. Durch die wachsende Cyber-Kriminalität sind zudem beispielsweise von neu in den Verkehr gebrachten Produkten national und international immer mehr Sicherheitsanforderungen zu erfüllen. Beispielhaft sei hier der Cyber Resiliance Act (CRA) der EU genannt. Diesem entgegnen Produkthersteller durch Analyse und Software-Aktualisierungen, welche dann auf die entsprechenden Geräte des Gebäudeautomationssystems aufzuspielen sind.

Hierbei müssen Komponenten bzw. Geräte verschiedener Hersteller in Netzwerken durch vom Hersteller zur Verfügung gestellte Werkzeuge durch Software-Aktualisierungen aktuell gehalten werden. Dabei muss das notwendige Werkzeug für die Aktualisierung in das Netzwerk gebracht werden. Zudem kann eine kostenpflichtige Lizenz erforderlich sein, z.B. wenn ein externes Tool und/oder eine lizenzpflichtige ETS (engineering tool software) notwendig ist.

Aufgrund langsamer Netzwerktechnologien kann ein Aktualisierungsvorgang für ein einzelnes Gerät zehn bis fünfzehn Minuten oder länger dauern, so dass z.B. für ein typisches Netzwerk von fünfzig Geräten eine Gesamt-Aktualisierungszeit mindestens acht Stunden betragen kann, ohne Berücksichtigung eventuell erforderlicher Wechsel zwischen den Aktualisierungswerkzeugen.

Die bisherig bekannten Verfahren sind damit aufwändig und zeitintensiv. Ein Verfahren zum Aufspielen einer Software ist beispielsweise aus der US 2008/057931 A1 bekannt. Ein weiteres Verfahren ist beispielsweise aus der US 2022/229653 A1 bekannt.,

### Zusammenfassung der Erfindung

Es ist Aufgabe der Erfindung, ein Verfahren und ein System bereitzustellen, welche die aus dem Stand der Technik bekannten Nachteile überwindet. Diese Aufgabe wird durch ein Verfahren nach Anspruch 1 und ein System nach Anspruch 9 gelöst. Die Unteransprüche betreffen jeweils besonders vorteilhafte Ausführungsformen.

Ein Aspekt der Erfindung betrifft ein Verfahren zum Aufspielen einer Software auf mindestens ein Gerät eines Gebäudeautomationssystems, wobei das Verfahren umfasst:
Empfangen einer gerätemodellabhängigen Software zum Aufspielen auf mindestens ein Gerät eines mit der Software kompatiblen Gerätemodells, wobei bevorzugt die Software aktualisierte Firmwaredaten umfasst;
Erzeugen von Aufspieldaten, wobei die Aufspieldaten die empfangene Software, Projektdaten des Gebäudeautomationssystems und Konfigurationsdaten der Aufspielung umfassen, wobei die Konfigurationsdaten der Aufspielung eines oder mehrere aus einer zugelassenen Netzwerk-Last beim Aufspielen der Software, einem Zeitpunkt eines Neustarts des Geräts und/oder einer Auslösungsart eines Neustarts des Geräts umfassen; und
Aufspielen der Software auf mindestens ein Gerät eines mit der Software kompatiblen Gerätemodells durch ein mit dem Gerät verbundenes zentrales Infrastrukturgerät des Gebäudeautomationssystems anhand der Aufspieldaten, wobei das zentrale Infrastrukturgerät bevorzugt eine zentrale Logikeinheit Gebäudeautomationssystems ist oder aufweist.

Die Software kann eine Firmware und/oder ein Firmware-Update umfassen, ist aber nicht zwingend darauf beschränkt. **In** einigen Ausführungsformen kann die Software generell ein Update bereits auf mindestens ein Gerät aufgespielter Software sein oder umfassen. **In** einigen Ausführungsformen kann die Software generell eine noch nicht auf mindestens ein Gerät aufgespielte Software sein oder umfassen.

Das Gebäudeautomationssystem kann ein Smart Home System sein oder aufweisen. Das Gebäudeautomationssystem und/oder das Smart Home System kann ein Türkommunikationssystem sein oder aufweisen.

Das zentrale Infrastrukturgerät kann vor Ort bzw. "on premise" vorgesehen und/oder angeordnet sein. Das zentrale Infrastrukturgerät kann in räumlicher Nähe der übrigen Geräte des Gebäudeautomationssystem angeordnet und/oder vorgesehen sein. Alternativ oder zusätzlich kann das zentrale Infrastrukturgerät über ein Tunneling, beispielsweise einen VPN-Tunnel, mit einem oder mehreren Geräten des Gebäudeautomationssystems verbunden sein. Beispielsweise muss das zentrale Infrastrukturgerät nicht zwingend vor Ort angeordnet sein.

Das zentrale Infrastrukturgerät kann zur Steuerung, Regelung und/oder Verwaltung der Geräte dienen. Das zentrale Infrastrukturgerät kann zur Steuerung, Regelung und/oder Verwaltung der Geräte des Gebäudeautomationssystems eingerichtet sein. Das zentrale Infrastrukturgerät kann Daten, Befehle und/oder Anweisungen an eines oder mehrere Geräte übermitteln. Das zentrale Infrastrukturgerät kann Daten von Geräten empfangen. Beispielsweise kann ein Gerät ein Sensor sein oder aufweisen, und Messwerte an das zentrale Infrastrukturgerät übermitteln. Das zentrale Infrastrukturgerät kann eine Logikeinheit sein oder aufweisen. Das zentrale Infrastrukturgerät und/oder die Logikeinheit kann eine komplexe Steuerung durchführen, beispielsweise durch Verknüpfung verschiedener Eingangsgrößen und Bedingungen.

Das zentrale Infrastrukturgerät kann als zentrale Steuer- und Vermittlungsinstanz innerhalb des Gebäudeautomationssystems fungieren und übernimmt die Aufgabe, die Software gezielt auf die vorgesehenen Geräte zu übertragen.

Die Software kann gerätemodellabhängig sein. Ein Gerätemodell, oder mehrere Gerätemodelle, kann/können mit der Software kompatibel sein. "Kompatibel" kann bedeuten, dass das Gerätemodell bzw. ein Gerät eines entsprechenden Gerätemodells dazu eingerichtet ist, die Software nach dem Aufspielen auszuführen. "Kompatibel" kann bedeuten, dass eine Hardware eines Geräts eines entsprechenden Gerätemodells mit der Software zusammenwirken kann, und/oder von der Software ansteuerbar und/oder adressierbar sein kann. "Kompatibel" kann bedeuten, dass eine bereits auf dem Gerät installierte Software eines Geräts eines entsprechenden Gerätemodells mit der aufzuspielenden Software zusammenwirken kann. "Kompatibel" kann bedeuten, dass ein Betriebssystem eines Geräts eines entsprechenden Gerätemodells mit der aufzuspielenden Software zusammenwirken kann.

Beim Aufspielen einer Software auf ein Gerät kann eine auf dem Gerät bereits vorhandene Software aktualisiert, geändert, modifiziert, gelöscht und/oder überschrieben sein oder werden. Beim Aufspielen einer Software auf ein Gerät kann einer auf dem Gerät bereits vorhandene Software neue Funktionen oder Features hinzugefügt sein oder werden, und/oder mindestens eine bereits vorhandene Funktion (oder ein bereits vorhandenes Feature) modifiziert und/oder entfernt werden. Beim Aufspielen einer Software auf ein Gerät kann eine neue Funktion oder ein neues Feature dem Gerät hinzugefügt sein oder werden, und/oder mindestens eine bereits vorhandene Funktion (oder ein bereits vorhandenes Feature) des Geräts modifiziert und/oder entfernt werden.

Ein Aufspielen der Software auf ein Gerät kann ein Übertragen der Software an das Gerät umfassen. In einigen Ausführungsformen kann die Software unmittelbar von dem zentralen Infrastrukturgerät an das entsprechende Gerät übertragen sein oder werden. Alternativ oder zusätzlich kann die Software von dem Infrastrukturgerät ausgehend über eines oder mehrere andere Geräte an das entsprechende Gerät weitergeleitet werden. Ein Aufspielen der Software auf ein Gerät kann ein Installieren der Software auf das Gerät umfassen.

Ein "ein mit dem Gerät verbundenes zentrales Infrastrukturgerät des Gebäudeautomationssystems" kann direkt oder unmittelbar mit dem Gerät verbunden sein. Alternativ oder zusätzlich kann das zentrale Infrastrukturgerät indirekt oder mittelbar mit dem Gerät verbunden sein, wobei z.B. Daten von dem zentrale Infrastrukturgerät über dazwischengeschaltete andere Geräte mit dem Gerät ausgetauscht werden können. Ein "mit dem Gerät verbundenes zentrales Infrastrukturgerät des Gebäudeautomationssystems" erfordert nicht zwingend eine unmittelbare oder direkte Datenübertragung und/oder Kommunikation von zentralem Infrastrukturgerät und Gerät.

Ein Gerät kann ein Schalter, ein Taster, ein Schieber, ein Sensor, ein Aktor oder dergleichen sein oder aufweisen. Ein Gerät kann eine Lichtquelle, eine Kamera, ein Lautsprecher, ein Mikrophon oder dergleichen sein oder aufweisen. Ein Gerät kann ein in der Gebäudetechnik verwendetes Gerät sein. Ein Gerät kann eine Lampe, Bewegungsmelder, ein Rauchmelder, eine Steckdose, eine Schaltanlage, ein Stromverteiler, eine Türsprechanlage, eine Heizung, ein Kühlschrank, eine Waschmaschine, ein Fernseher, ein Radio, ein Küchengerät, oder dergleichen sein oder aufweisen. Die aufgeführten Geräte sind lediglich beispielhaft.

Die Geräte des Gebäudeautomationssystems können miteinander zum Datenaustausch verbunden sein. Mindestens eines, mehrere oder alle der Geräte kann bzw. können mit mindestens einem anderen, mehreren anderen oder allen anderen Geräten zum Datenaustausch verbunden sein. Das zentrale Infrastrukturgerät kann mit mindestens einem, mehreren oder allen der Geräte zum Datenaustausch verbunden sein. Die Geräte und/oder das zentrale Infrastrukturgerät kann eine oder mehrere geeignete Schnittstellen, z.B. Datenschnittstellen oder Übertragungsschnittstellen, aufweisen.

Das Gebäudeautomationssystem kann ein Netzwerk haben, durch das Geräte und/oder das zentrale Infrastrukturgerät kommunizieren und/oder Daten austauschen können. Das Gebäudeautomationssystem kann geeignete Verbindungen haben.

Eine Verbindung kann drahtlos sein. Alternativ kann eine Verbindung auch kabelgebunden sein. In einigen Ausführungsformen kann eine Verbindung zwischen zwei Geräten und/oder eine Verbindung zwischen einem Gerät und dem zentralen Infrastrukturgerät drahtlos sein, und eine andere Verbindung zwischen zwei Geräten und/oder eine Verbindung zwischen einem Gerät und dem zentralen Infrastrukturgerät kabelgebunden sein.

Mindestens eines, mehrere oder alle der Geräte, und/oder das zentrale Infrastrukturgerät, kann ein KNX-fähiges Gerät sein. Es kann vorgesehen sein, dass mindestens zwei der Geräte miteinander über KNX kommunizieren und/oder Daten austauschen können. Es kann vorgesehen sein, dass das zentrale Infrastrukturgerät mit mindestens einem, mehreren oder allen Geräten über KNX kommunizieren und und/Daten austauschen kann. Die Offenbarung ist aber nicht auf KNX beschränkt. Beispielsweise kann auch narrowband-IoT, LTE, Bluetooth, NFC, ZigBee, Z-Wave, ANT+, WLAN, oder andere geeignete Übertragungsverfahren vorgesehen sein.

Die Aufspieldaten können insbesondere Anweisungen, Instruktionen und/oder Informationen dahingehend umfassen, auf welche(s) der Geräte die Software aufgespielt werden soll. Die Aufspieldaten können insbesondere Anweisungen, Instruktionen und/oder Informationen dahingehend umfassen, wann und/oder wie die Software aufgespielt werden soll. Die Aufspieldaten können damit eine Dateneinheit sein oder aufweisen, die neben der eigentlichen, gerätemodellabhängigen Software auch projektspezifische Informationen des jeweiligen Gebäudeautomationssystems sowie Konfigurationsdaten für den Installationsvorgang umfasst.

Die Projektdaten können Informationen über die Geräte des Gebäudeautomationssystems umfassen. Es kann vorgesehen sein, dass Projektdaten Informationen über das zentrale Infrastrukturgerät des Gebäudeautomationssystems umfassen können. Die Projektdaten können beispielsweise ein Modell und/oder einen Typ eines, mehrerer oder aller Geräte des Gebäudeautomationssystems (und/oder des zentralen Infrastrukturgeräts) enthalten. Die Projektdaten können beispielsweise Informationen und/oder Daten enthalten, die ein Routing und/oder eine Kommunikation der Geräte des Gebäudeautomationssystems und/oder des zentralen Infrastrukturgeräts untereinander definieren oder festlegen. Anhand der Projektdaten kann beispielsweise bestimmt sein oder werden, auf welchem Weg und/oder über welche Verbindungen die Software von dem zentralen Infrastrukturgerät an ein bestimmtes Gerät übertragen werden kann.

Die Projektdaten können dazu dienen, ein Gerät zu bestimmen, auf welches die Software aufgespielt sein oder werden soll. Die Projektdaten können dazu dienen, ein Gerät zu bestimmen, auf welches die Software aufgespielt sein oder werden soll. Beispielsweise kann anhand der Projektdaten identifiziert werden, welches Gerät einen Gerätemodell ist oder einem solchen entspricht, mit dem die Software kompatibel ist. Beispielsweise kann vorgesehen sein, dass die Software auf ein bestimmtes Gerätemodell aufgespielt werden soll, und mit den Projektdaten ein oder mehrere entsprechende Geräte identifiziert und/oder ausgewählt werden.

Das Verfahren kann ein Aufspielen der Software erleichtern. Dadurch, dass die Aufspielung durch das zentrale Infrastrukturgerät des Gebäudeautomationssystems durchgeführt wird, kann auf ein Spezialgerät, d.h. ein spezielles Werkzeug, z.B. einen PC / Mac, oder eine Lizenz einer Installationssoftware des Systemverwalters verzichtet werden. Zudem entfällt damit die Notwendigkeit, dass ein entsprechendes Werkzeug für die ganze Zeit des Aktualisierungsvorgangs im Gebäudeautomationssystem verbleiben muss. Weiterhin kann sich eine erhöhte Flexibilität der Aufspielung ergeben, da das zentrale Infrastrukturgerät sowohl den Betrieb des Gebäudeautomationssystems steuern kann, als auch die Aufspielung kontrolliert und steuert. Damit können Eigenschaften des Gebäudeautomationssystem, wie auch dynamische Zustände, z.B. Netzwerklasten, Betriebszustände, oder dergleichen, bei der Aufspielung berücksichtigt werden. Die Aufspielung kann derart erfolgen, und/oder gesteuert und/ oder kontrolliert sein oder werden, dass das Gebäudeautomationssystem während der Aufspielung in Betrieb bleiben kann, z.B. seine Funktionen weiter erfüllen kann.

Die Konfigurationsdaten können Anweisungen an die zentrale Logikeinheit darstellen oder umfassen, wann und/oder wie die Software auf einem oder mehreren Geräten aufgespielt werden soll. Beispielsweise kann durch die Festlegung eines spezifischen Startzeitpunkts der Aufspielung eine zeitliche Koordination mit anderen Systemprozessen oder Nutzeranforderungen erfolgen, was eine erhöhte Flexibilität und eine bessere Integration in bestehende Betriebsabläufe des Gebäude-Automations-Systems ermöglichen kann. Beispielsweise kann beispielsweise das Aufspielen der Software auf Zeiten mit geringer Netzwerkauslastung gelegt werden, z.B. nachts oder zu sonstigen Zeiten, zu denen z.B. statistisch das Gebäudeautomationssystem wenig oder nur geringfügig genutzt wird.

Die Berücksichtigung einer zugelassenen Netzwerk-Last kann ermöglichen, die Belastung der Verbindungen während des Software-Updates zu steuern und/oder Überlastungen zu vermeiden, indem beispielsweise die Datenübertragung auf Zeiten mit geringer Netzwerkauslastung gelegt oder die Übertragungsrate begrenzt werden kann. Alternativ oder zusätzlich kann beispielsweise die Übertragungsrate der Software angepasst und/oder variiert sein oder werden, z.B. in Abhängigkeit der Netzwerklast und/oder zeitlich. Dies kann zu einer erhöhten Systemstabilität führen, und/oder das Risiko von Ausfällen oder Verzögerungen bei anderen netzwerkbasierten Diensten, insbesondere der Benutzung, Steuerung oder regulären Funktion des Gebäudeautomatisierungssystems, minimiert sein oder werden.

Die Definition eines Zeitpunkts für einen Neustart des Geräts und/oder die Festlegung einer Auslösungsart für diesen Neustart - etwa ob der Neustart automatisch nach Abschluss des Updates oder manuell durch einen Nutzer ausgelöst werden soll -kann eine gezielte Steuerung des Update-Prozesses ermöglichen und z.B. dazu beitragen, eine unerwünschte Betriebsunterbrechungen zu vermeiden.

In einigen Ausführungsformen kann beim Aufspielen der Software auf das Gerät eine Übertragungsrate angepasst werden. Es kann vorgesehen sein, dass die Übertragungsrate derart angepasst wird, dass ein Betriebszustand des Gebäudautomationssystems aufrechterhalten ist, und/oder aufrechterhalten bleibt.

Mit Übertragungsrate kann eine Übertragungsrate der Software zwischen dem zentralen Infrastrukturgerät und einem oder dem Gerät, und/oder zwischen zwei Geräten, gemeint sein. Mit Übertragungsrate kann eine Übertragungsrate der Software über eine Verbindung des Gebäudeautomationssystems gemeint sein. Die Übertragungsrate über verschiedene Verbindungen kann unterschiedlich sein. Beispielsweise kann die Software über eine Verbindung schneller (oder langsamer) als über eine andere Verbindung übertragen sein oder werden.

Die Übertragungsrate kann gesteuert und/oder geregelt sein. Die Übertragungsrate kann dynamisch angepasst sein oder werden.

Durch Anpassen der Übertragungsrate kann z.B. sichergestellt sein oder werden, dass ausreichend Kapazität des Netzwerks, z.B. einer Verbindung des Gebäudautomationssystems, verbleiben kann, um einen Betriebszustand des Gebäudautomationssystems aufrechtzuerhalten. Ein Betriebszustand kann beispielsweise ein Regelbetrieb, und/oder ein Normalbetrieb des Gebäudautomationssystems sein. In einem Betriebszustand kann das Gebäudautomationssystem eine oder mehrere seiner Funktionen ausführen und/oder erfüllen. In einem Betriebszustand können Steuerbefehle, Daten, Anweisungen, Instruktionen oder dergleichen zwischen Geräten des Gebäudautomationssystems, und/oder zwischen dem zentralen Infrastrukturgerät und einem oder mehreren Geräten des Gebäudautomationssystems, ausgetauscht oder übermittelt werden, welche z.B. zur Ausführung von Funktionen des Gebäudautomationssystems dienen. Die Übertragungsrate der Software kann derart angepasst werden, dass entsprechende Steuerbefehle, Daten, Anweisungen, Instruktionen oder dergleichen über das Netzwerk, und/oder eine oder mehrere Verbindungen, auch beim Aufspielen der Software übermittelt sein oder werden können, und/oder von einem oder mehreren Geräten verarbeitet sein oder werden können.

Es kann vorgesehen sein, dass die Übertragungsrate beispielsweise basierend auf einer Netzwerk-Last des Gebäudautomationssystems angepasst wird. Die Netzwerk-Last des Gebäudautomationssystem kann bestimmt sein oder werden, z.B. von dem zentralen Infrastrukturgerät und/oder einem oder mehreren Geräten. Die Bestimmung der Netzwerk-Last kann wiederholt und/oder periodisch erfolgen.

Damit kann sichergestellt sein, dass beim Aufspielen der Software das Gebäudautomationssystem eine oder mehrere seiner Funktionen erfüllen kann. Beispielsweise kann damit eine "down-time" oder dergleichen des Gebäudautomationssystems beim Aufspielen der Software vermieden werden.

**In** einigen Ausführungsformen kann vorgesehen sein, dass die Projektdaten des Gebäudeautomationssystems eines oder mehrere aus Gebäudedaten, eindeutigen Adressen, Parameter, Multicast-Adressen, Logikfunktionen, Gerätemodell, und/oder Gerätetyp der Geräte des Gebäudeautomationssystems umfassen, und/oder eine Topologie des Gebäudeautomationssystems umfassen.

Gebäudedaten können ETS-Daten sein oder umfassen. ETS-Daten können Daten sein oder umfassen, die mit der Engineering Tool Software (ETS) erstellt wurden. Ein ETS ist ein Planungstool für KNX-basierte Gebäudeautomationssysteme, das die Konfiguration und Parametrierung von Geräten sowie die Definition der Systemtopologie ermöglichen kann.

Eindeutige Adressen können individuelle Kennungen sein oder umfassen, die jedem Gerät im Gebäudeautomationssystem zugeordnet werden, um eine eindeutige Identifikation, und/oder eine gezielte Kommunikation und/oder eine gezielte Datenübertragung, zu gewährleisten.

Parameter können spezifische Einstellwerte und/oder Betriebsparameter sein oder umfassen. Parameter können das Verhalten oder die Funktion eines Geräts oder einer Systemkomponente bestimmen.

Multicast-Adressenkönnen der logischen Zusammenfassung mehrerer Geräte oder Funktionen dienen. Beispielsweise können Daten und/oder Befehle an eine Multicast-Adresse übermittelt werden, so dass alle Geräte dieser Gruppe entsprechend den Befehl ausführen können und/oder die entsprechenden Daten erhalten können. Beispielsweise kann eine Gruppe mehrere Geräte, z.B. Lampen, in einem Raum umfassen, die durch einen Steuerbefehl an die gemeinsame Multicast-Adresse gemeinsam gesteuert sein oder werden können. Beispielsweise kann eine Gruppe mehrere Aktoren von Jalousien in einem Raum umfassen, die durch einen Steuerbefehl an die gemeinsame Multicast-Adresse gemeinsam gesteuert sein oder werden können. Prinzipiell können die Geräte entsprechend einer Projektierung in Gruppen eingeteilt sein oder werden. Es kann vorgesehen sein, dass ein Gerät mehr als einer Gruppe zugeordnet sein kann. Multicast-Adressen können Gruppenadressen sein oder umfassen.

Eine Topologie kann die physikalische und/oder logische Struktur des Gebäudeautomationssystems abbilden und/oder repräsentieren, beispielsweise die Verschaltung und/oder einen Aufbau des Gebäudeautomationssystems, z.B. eine Kommunikation zwischen verschiedenen Einheiten des Gebäudeautomationssystems.

Durch die Einbeziehung der Projektdaten in die Aufspieldaten, die für das Aufspielen der Software auf die Geräte verwendet werden, wird eine besonders flexible und zielgerichtete Anpassung der Softwareinstallation an die individuellen Gegebenheiten des jeweiligen Systems ermöglicht. Ein Vorteil dieses Ansatzes liegt darin, dass die Software nicht nur gerätemodellabhängig, sondern auch projektspezifisch aufgespielt werden kann, sodass etwaige Besonderheiten der Systemkonfiguration, der Adressierung oder der logischen Verknüpfungen unmittelbar berücksichtigt werden können.

Dadurch kann eine erhöhte Kompatibilität und Funktionssicherheit beim Aufspielen der Software, z.B. bei einem Software-Update oder bei einer Erstinstallation, erzielt werden, da die aufgespielte Software exakt auf die tatsächlichen Anforderungen und die vorhandene Systemstruktur abgestimmt werden kann.

Ein weiterer Vorteil ergibt sich aus der Möglichkeit, durch die Übermittlung der Systemtopologie und der gruppenbezogenen Adressierungsdaten eine automatisierte und fehlerresistente Zuordnung der Software zu den jeweiligen Geräten vorzunehmen, wodurch der manuelle Aufwand bei der Inbetriebnahme oder Aktualisierung des Systems erheblich reduziert werden kann. Zudem kann durch die Projektdaten eine nahtlose Übernahme bestehender Steuerungslogiken und/oder individueller Geräteeinstellungen in die neue Softwareumgebung ermöglicht sein oder werden, was die Kontinuität und Stabilität des Systembetriebs fördern kann.

In einigen Ausführungsformen kann die gerätemodellabhängige Software von einer Vorbereitungseinheit und/oder dem zentralen Infrastrukturgerät empfangen werden, und/oder die Aufspieldaten von der Vorbereitungseinheit und/oder dem zentralen Infrastrukturgerät erzeugt werden.

Der Begriff Vorbereitungseinheit kann eine separate, beispielsweise speziell für die Vorverarbeitung und Bereitstellung von Software- und Konfigurationsdaten vorgesehene Komponente bezeichnen, die entweder als eigenständiges Gerät oder als logische Funktion innerhalb des Systems, und/der des Gebäudeautomationssystems, ausgestaltet sein kann. In einigen Ausführungsformen kann die Vorbereitungseinheit ein von dem zentralen Infrastrukturgerät verschiedenes Gerät sein oder aufweisen. Alternativ oder zusätzlich kann vorgesehen sein, dass die Vorbereitungseinheit mit dem zentralen Infrastrukturgerät identisch sein kann, und/oder die Vorbereitungseinheit eine Komponente und/oder ein Unterelement des zentralen Infrastrukturgerät sein kann. Alternativ oder zusätzlich kann vorgesehen sein, dass das zentrale Infrastrukturgerät eine logische Funktion umfassen und/oder ausführen kann, die als Vorbereitungseinheit angesehen sein oder werden kann, beispielsweise als Anwendung, Programm oder Software implementiert sein. Alternativ oder zusätzlich kann vorgesehen sein, dass die Vorbereitungseinheit eine Anwendung umfassen kann, und/oder als Anwendung, Programm oder Software implementiert sein kann.

In einigen Ausführungsformen kann die Vorbereitungseinheit außerhalb des Gebäudeautomationssystems angesiedelt sein. Beispielsweise kann die Vorbereitungseinheit bereits vor der Installation oder Aktualisierung die notwendigen Datenpakete, insbesondere die Aufspieldaten, zusammenstellen. Dies kann beispielsweise eine Entlastung des zentralen Infrastrukturgeräts und/oder eine verbesserte Vorbereitung von Rollouts ermöglichen. Alternativ kann das zentrale Infrastrukturgerät diese Aufgaben übernehmen, was z.B. dann vorteilhaft sein kann, wenn eine direkte Anbindung an die Geräte und eine unmittelbare Reaktion auf Systemzustände erforderlich ist.

Die Kommunikation zwischen Vorbereitungseinheit und zentralem Infrastrukturgerät kann über standardisierte oder proprietäre Schnittstellen erfolgen, wobei der Datenaustausch sowohl lokal und/oder über eine Netzwerkverbindungen realisierbar sein kann.

Die Vorbereitungseinheit kann als zentrales Repository für verschiedene Softwareversionen und Konfigurationsprofile dienen, wodurch sich die Verwaltung und Verteilung von Updates effizienter gestalten lassen kann. Es kann vorgesehen sein, bei einer Vorverarbeitung und/oder einem Erzeugen der Aufspieldaten außerhalb des eigentlichen Gebäudeautomationssystems die Integrität und Kompatibilität der Aufspieldaten, insbesondere der Software, vorab zu prüfen, was beispielsweise die Zuverlässigkeit und Sicherheit des Aufspielens z.B. eines des Update-Prozesses, erhöhen kann.

In einigen Ausführungsformen können die Aufspieldaten an das zentrale Infrastrukturgerät übermittelt werden. Es kann vorgesehen sein, dass die Aufspieldaten über TCP oder KNX an das zentrale Infrastrukturgerät übermittelt werden.

Die Verwendung von TCP (Transmission Control Protocol) kann sicherstellen, dass Daten verbindungssicher und zuverlässig übertragen werden können. Beispielsweise können durch TCP verlorene oder fehlerhafte Datenpakete erkannt werden, und nochmals übersendet werden. Beispielsweise kann sichergestellt sein, dass Datenpakete in einer richtigen Reihenfolge ankommen und/oder übermittelt werden. Zudem kann beispielsweise eine Datenmenge kontrolliert werden, so dass eine Überlastung des Netzwerks und/oder des Empfängers vermieden oder zumindest reduziert werden kann.. Alternativ oder zusätzlich kann KNX als etabliertes Feldbusprotokoll für die Gebäudeautomation eingesetzt werden, das eine standardisierte, interoperable und zuverlässige Kommunikation zwischen verschiedenen Komponenten eines Gebäudeautomationssystems gewährleisten kann.

Durch die Nutzung standardisierter Protokolle, wie z.B. KNX, kann eine herstellerübergreifende Kompatibilität gefördert werden, sodass das Verfahren in einer Vielzahl von Anwendungsfällen und mit unterschiedlichen Gerätetypen und/oder Gerätemodellen einsetzbar sein kann.

In einigen Ausführungsformen kann beim Aufspielen der Software die Software auf alle Geräte des Gebäudeautomationssystems, die mit der Software kompatibel sind, aufgespielt werden. Alternativ und/oder zusätzlich kann vorgesehen sein, dass die Aufspieldaten Informationen und/oder Angaben enthalten, auf welche(s) der Geräte die Software aufgespielt werden soll. In diesem Fall kann vorgesehen sein, dass die Software nicht auf nicht angegebene Geräte aufgespielt wird. In einigen Ausführungsformen kann damit auch die Software nur auf eines oder mehrere bestimmte Geräte eines Gerätemodells, nicht aber auf alle Geräte des Gerätemodells, aufgespielt sein oder werden.

In einigen Ausführungsformen kann das zentrale Infrastrukturgerät eine Aufspielung der Software pausieren, fortsetzen, abbrechen, löschen und/oder rückgängig machen.

Mit den Begriffen "pausieren" und "fortsetzen" kann gemeint sein, einen laufenden Softwareaufspielvorgang temporär zu unterbrechen und zu einem späteren Zeitpunkt ohne Datenverlust oder erneute Initialisierung weiterzuführen, was insbesondere bei längeren oder netzwerkintensiven Updates sowie bei instabilen Verbindungen von Vorteil sein kann. Ein "Abbrechen" kann ermöglichen, einen bereits gestarteten Aufspielvorgang gezielt zu beenden, etwa im Falle von Fehlern, Sicherheitsbedenken oder geänderten Prioritäten, ohne dass das System in einen inkonsistenten Zustand gerät. Ein "löschen" kann umfassen, ein geplantes, aber noch nicht erfolgtes, Aufspielen einer Software nicht durchzuführen, und/oder z.B. aus einer Warteschlange, einem Scheduler oder dergleichen zu entfernen. Alternativ kann ein "löschen" auch umfassen, eine bereits aufgespielte, aber noch nicht aktivierte oder freigegebene Software wieder vom Zielgerät oder aus dem System zu entfernen, beispielsweise um Speicherressourcen freizugeben oder fehlerhafte Versionen zu beseitigen. Mit "Rückgängigmachen" kann gemeint sein, eine zuvor aufgespielte Softwareversion durch eine ältere, als stabil bekannte Version zu ersetzen, z.B. durch eine Art Rollback-Mechanismus, der die Systemstabilität und Ausfallsicherheit erhöhen kann.

Durch die Möglichkeit des Pausierens und Fortsetzens können z.B. Wartungsfenster besser genutzt und Systemausfallzeiten minimiert werden. Durch ein Löschen und/oder Rückgängigmachen kann eine Gefahr von Fehlkonfigurationen oder fehlerhaften Updates reduziert sein oder werden, und/oder die Zuverlässigkeit und Langlebigkeit des Gebäudeautomationssystems erhöht sein oder werden.

Durch das zentrale Infrastrukturgerät kann eine konsistente und koordinierte Verwaltung mehrerer Geräte innerhalb des Gebäudeautomationssystems unterstützt sein oder werden, wodurch sich z.B. in größeren Installationen oder bei sicherheitskritischen Anwendungen ein erhöhter Bedienkomfort und eine gesteigerte Betriebssicherheit ergeben.

In einigen Ausführungsformen kann das zentrale Infrastrukturgerät die Aufspieldaten und/oder die Aufspielung protokollieren.

Ein Protokollieren der Aufspieldaten kann umfassen, dass einige, mehrere oder alle für die Aufspielung bzw. Softwareverteilung relevanten Informationen, wie etwa die empfangene gerätemodellabhängige Software, die projektspezifischen Daten des Automationssystems und/oder die spezifischen Konfigurationsdaten der Aufspielung, in einer nachvollziehbaren Form gespeichert werden. Das Protokollieren der Aufspielung selbst kann eine lückenlose Erfassung des Ablaufs und Status der Übertragung und Installation der Software auf den jeweiligen Zielgeräten umfassen, sodass etwaige Fehler, Unterbrechungen oder erfolgreiche Abschlüsse eindeutig dokumentiert sein können.

Die Protokollierung kann eine Protokollierung und/oder ein abspeichern eines Versionsverlaufs der Software umfassen. Die Protokollierung eines Versionsverlaufs der Software kann beispielsweise umfassen, dass für jedes Gerät oder jede Gerätegruppe festgehalten wird, welche Softwareversion zu welchem Zeitpunkt aufgespielt wurde und ob gegebenenfalls ein Update oder ein Rollback stattgefunden hat.

Dadurch kann eine transparente, nachvollziehbare und revisionssichere Verwaltung sämtlicher Softwareverteilungsprozesse innerhalb des Gebäudeautomationssystems ermöglicht sein oder werden. Durch eine lückenlose Dokumentation und Historisierung der Softwareverteilung kann eine erhöhte Betriebssicherheit und Wartungsfreundlichkeit erzielt werden, da z.B. im Fehlerfall oder bei Supportanfragen jederzeit nachvollzogen werden kann, welche Softwareversion auf welchen Geräten aktiv sind oder waren. Darüber hinaus kann die Einhaltung regulatorischer Vorgaben, wie sie etwa im Bereich der Gebäudeautomation oder im Zusammenhang mit Sicherheitsanforderungen bestehen können, unterstützt sein oder werden, da die Protokolle als Nachweis für ordnungsgemäße Softwareverteilung und Systempflege dienen können. Durch eine zentrale Protokollierung kann eine effiziente Planung und Durchführung von Softwareupdates, Rollbacks oder gezielten Wartungsmaßnahmen ermöglicht werden, ohne dass in einigen Fällen eine manuelle Einzelüberprüfung der Geräte erforderlich sein muss. Zudem kann durch die Auswertung der Protokolle eine Optimierung der Update-Strategie erfolgen, indem etwa typische Fehlerquellen oder Engpässe identifiziert und gezielt adressiert werden können. Die Protokollierung kann dazu beitragen, die Integrität und Aktualität der Software der Geräte zu gewährleisten, was insbesondere bei sicherheitskritischen Anwendungen, wie etwa in Türkommunikationssystemen, von besonderer Bedeutung sein kann.

In einigen Ausführungsformen kann das zentrale Infrastrukturgerät einen Steuerbefehl von einem externen Gerät empfangen und basierend darauf die Aufspielung starten, pausieren, fortsetzten, abbrechen, und/oder rückgängig machen. Alternativ oder zusätzlich kann das zentrale Infrastrukturgerät eine oder mehrere Informationen der Aufspielung an ein oder das externe Gerät übermitteln. Beispielsweise kann vorgesehen sein, dass das zentrale Infrastrukturgerät einen Zustand einer Aufspielung und/oder einen Versionsverlauf der Software an ein oder das externe Gerät übermitteln kann. Das zentrale Infrastrukturgerät kann eine Protokollierung, und/oder mindestens eine Information einer Protokollierung, an das externe Gerät übermitteln.

Ein externes Gerät kann ein Mobilgerät sein oder aufweisen. Ein externes Gerät kann beispielsweise ein mobiles Endgerät, ein Smartphone, ein Laptop, ein Tablet oder dergleichen sein oder aufweisen. Ein externes Gerät kann ein Server sein oder aufweisen. Das externe Gerät kann über eine geeignete Kommunikationsschnittstelle mit dem zentralen Infrastrukturgerät verbunden sein oder werden. Die Verbindung kann drahtlos und/oder kabelgebunden sein. Das externe Gerät kann mit dem zentralen Infrastrukturgerät Daten austauschen. Beispielsweise kann das externe Gerät mit dem zentralen Infrastrukturgerät z.B. über Internet, WLAN, Bluetooth, NFC, LTE, narrowband-IoT, oder dergleichen verbunden sein.

Das zentrale Infrastrukturgerät kann ein Visualisierungsserver sein oder aufweisen. Es kann vorgesehen sein, dass ein Benutzer über eine App mit seinem externen Gerät das Gebäudeautomationssystem steuern kann, und/oder Informationen, Zustände und/oder Parameter des Gebäudeautomationssystems, insbesondere der Geräte, abfragen kann. Es kann vorgesehen sein, dass über eine oder die App auf das Gebäudeautomationssystem zugegriffen werden kann. Beispielsweise kann mit der App einer oder mehrere Parameter der Geräte geändert werden. Ein Benutzer kann über die App Befehle, beispielsweise Steuerungsbefehle und/oder Anweisungen, an das zentrale Infrastrukturgerät kommunizieren, welches die entsprechenden Befehle ausführen kann, und/oder an die entsprechenden Gerät übermitteln kann.

Darüber hinaus ist das zentrale Infrastrukturgerät in der Lage, Statusinformationen, Zustandsmeldungen und/oder einen Versionsverlauf der aufgespielten Software an das externe Gerät zu übermitteln. Beispielsweise kann angezeigt und/oder kommuniziert werden, ob ein Vorgang bzw. eine Aufspielung erfolgreich abgeschlossen, noch in Bearbeitung, pausiert oder fehlgeschlagen ist. Beispielsweise können detaillierte Informationen über den aktuellen Fortschritt oder etwaige Fehler angezeigt und/oder kommuniziert werden, z.B. an einem Benutzer oder Servicepersonal.. Weiterhin kann ein Risiko von Fehlbedienungen oder unerwünschten Unterbrechungen reduziert sein oder werden, da gezielte Steuerbefehle und Statusabfragen eine bedarfsgerechte Steuerung und Überwachung ermöglichen können. Durch Übermittlung des Versionsverlaufs kann z.B. eine Nachvollziehbarkeit und Rückverfolgbarkeit von Änderungen ermöglicht sein, was insbesondere im Hinblick auf die IT-Sicherheit und die Einhaltung regulatorischer Vorgaben von Bedeutung sein kann.

Ein weiterer Aspekt der Erfindung betrifft ein System, aufweisend ein Gebäudeautomationssystem wobei das System dazu eingerichtet ist, eine Software auf mindestens ein Gerät des Gebäudeautomationssystems aufzuspielen, wobei das System weiter dazu eingerichtet ist:
eine gerätemodellabhängige Software zum Aufspielen auf mindestens ein Gerät eines mit der Software kompatiblen Gerätemodells zu empfangen, wobei bevorzugt die Software aktualisierte Firmwaredaten umfasst;
Aufspieldaten zu erzeugen, wobei die Aufspieldaten die empfangene Software, Projektdaten des Gebäudeautomationssystems und Konfigurationsdaten der Aufspielung umfassen, wobei die Konfigurationsdaten der Aufspielung eines oder mehre aus einer zugelassene Netzwerk-Last beim Aufspielen der Software, einem Zeitpunkt eines Neustarts des Geräts und/oder einer Auslösungsart eines Neustarts des Geräts umfassen; und
die Software auf mindestens ein Gerät eines mit der Software kompatiblen Gerätemodells durch ein mit dem Gerät verbundenes zentrales Infrastrukturgerät des Gebäudeautomationssystems anhand der vorbereiteten Aufspieldaten aufzuspielen, wobei das zentrale Infrastrukturgerät bevorzugt eine zentrale Logikeinheit des Gebäudeautomationssystems ist oder aufweist.

Das System kann dazu eingerichtet sein und/oder verwendet werden, ein offenbarungsgemäßes Verfahren durchzuführen. Ein offenbarungsgemäßes Verfahren kann durch das System durchgeführt sein.

Das System kann eines, mehrere oder alle der hinsichtlich offenbarungsgemäßer Verfahren beschriebener und/oder offenbarter Vorteile aufweisen. Das System kann eines, mehrere oder alle der hinsichtlich offenbarungsgemäßer Verfahren beschriebene und/oder offenbarte Merkmale aufweisen.

Das System ermöglich beispielsweise eine erhöhte Flexibilität und Effizienz bei der Aktualisierung und/oder Konfiguration von Geräten innerhalb eines Gebäudeautomationssystems, da Software gezielt und modellabhängig verteilt werden kann. Zudem kann durch die zentrale Steuerung des Aufspielens eine konsistente und kontrollierte Verteilung der Software, z.B. von Firmware- und Konfigurationsdaten, gewährleistet werden.

**In** einigen Ausführungsformen kann das System dazu eingerichtet sein, beim Aufspielen der Software auf das Gerät eine Übertragungsrate anzupassen. Das System kann dazu eingerichtet sein, die Übertragungsrate derart anzupassen, dass ein Betriebszustand des Gebäudautomationssystems aufrechterhalten ist, und/oder aufrechterhalten bleibt.

Es kann vorgesehen sein, dass das zentrale Infrastrukturgerät dazu eingerichtet sein kann, die Übertragungsrate der Software beim Aufspielen der Software anzupassen. Es kann vorgesehen sein, dass ein Gerät, oder mehrere Geräte, dazu eingerichtet sein kann/sein können, die Übertragungsrate der Software beim Aufspielen der Software anzupassen.

**In** einigen Ausführungsformen kann vorgesehen sein, dass die Projektdaten des Gebäudeautomationssystems eines oder mehrere aus Gebäudedaten (z.B. ETS-Daten), eindeutigen Adressen, Parameter, Multicast-Adresse (z.B. Gruppenadressen), Logikfunktionen, Gerätemodell, und/oder Gerätetyp der Geräte des Gebäudeautomationssystems umfassen, und/oder bei dem die Projektdaten des Gebäudeautomationssystems eine Topologie des Gebäudeautomationssystems umfassen.

**In** einigen Ausführungsformen kann das System dazu eingerichtet sein, beim Aufspielen der Software die Software auf alle Geräte des Gebäudeautomationssystems, die mit der Software kompatibel sind, aufzuspielen.

**In** einigen Ausführungsformen kann das System eine Vorbereitungseinheit aufweisen, die dazu eingerichtet sein kann, die gerätemodellabhängige Software zu empfangen und/oder die Aufspieldaten zu erzeugen, und/oder wobei das zentrale Infrastrukturgerät dazu eingerichtet ist, die gerätemodellabhängige Software zu empfangen und/oder die Aufspieldaten zu erzeugen.

**In** einigen Ausführungsformen kann das zentrale Infrastrukturgerät dazu eingerichtet sein, eine Aufspielung der Software zu pausieren, fortzusetzen, abzubrechen, zu löschen und/oder rückgängig zu machen.

In einigen Ausführungsformen kann das zentrale Infrastrukturgerät dazu eingerichtet sein, die Aufspieldaten und/oder die Aufspielung zu protokollieren.

In einigen Ausführungsformen kann das System dazu eingerichtet sein, einen Steuerbefehl von einem externen Gerät zu empfangen und basierend darauf die Aufspielung zu starten, zu pausieren, fortzusetzen, abzubrechen, und/oder rückgängig zu machen.

In einigen Ausführungsformen kann das System dazu eingerichtet sein, eine Information einer Aufspielung, bevorzugt eines oder mehrere aus einem Status einer Aufspielung, einem Zustand einer Aufspielung und/oder einem Versionsverlauf der Software, an ein oder das externe Gerät zu übermitteln.

### Kurzbeschreibung der Figuren

Die Offenbarung wird anhand der beispielhaften Figuren weiter erläutert. Es zeigen:
- Fig. 1:: eine beispielhafte schematische Darstellung einer beispielhaften Ausführungsform eines Systems gemäß einem Aspekt der Offenbarung;
- Fig. 2:: eine beispielhafte schematische Darstellung einer weiteren beispielhaften Ausführungsform eines Systems gemäß einem Aspekt der Offenbarung;
- Fig. 3:: ein beispielhaftes Ablaufdiagramm einer beispielhaften Ausführungsform eines Verfahrens gemäß einem Aspekt der Offenbarung.

### Beschreibung einiger Ausführungsbeispiele

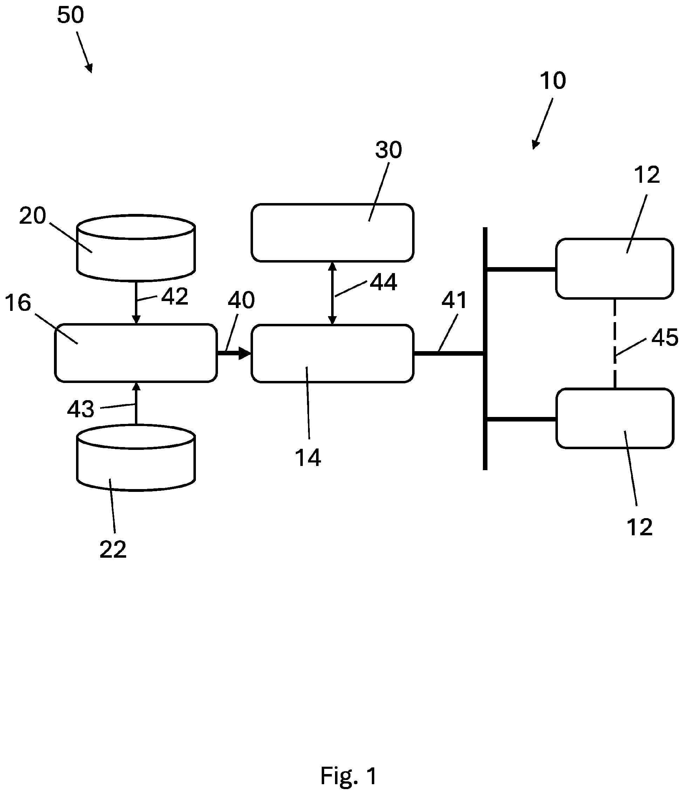

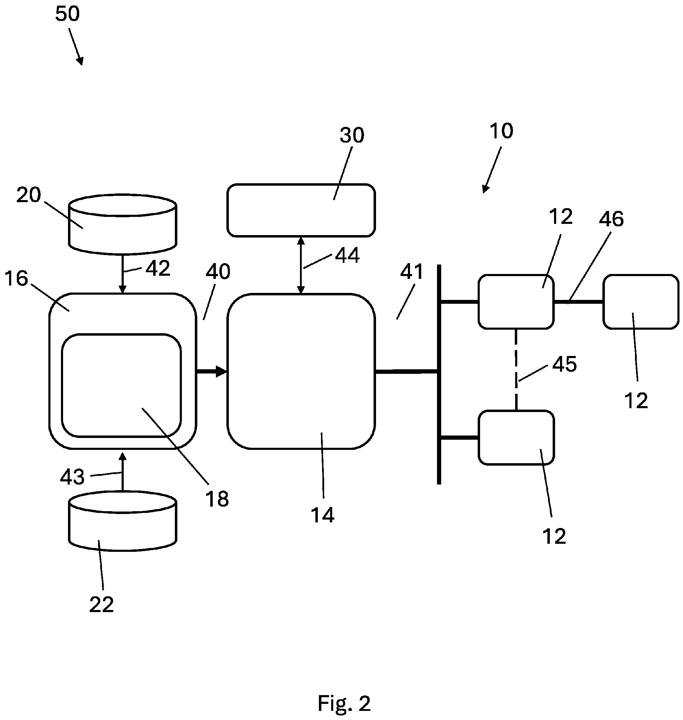

Figur 1 und 2 zeigen ein Ausführungsbeispiel eines Systems 50 gemäß einem Aspekt der Offenbarung.

Das System 50 weist ein Gebäudeautomationssystem 10 auf. Das Gebäudeautomationssystem 10 kann ein Smart Home sein oder aufweisen. Das Gebäudeautomationssystem 10 kann ein Türkommunikationssystem sein oder aufweisen.

Das Gebäudeautomationssystem 10 weist mindestens ein Gerät 12 auf. Das Gebäudeautomationssystem 10 kann insbesondere eine Mehrzahl Geräte 12 aufweisen. Es kann vorgesehen sein, dass mindestens zwei der Geräte 12 zum Datenaustausch über eine Verbindung 45 verbunden sein können. In einigen Ausführungsformen können einige, mehrere oder alle der Geräte 12 zum Datenaustausch mit mindestens einem, mehreren oder allen anderen Geräten 12 verbunden sein. Beispielsweise können einige oder alle der Geräte 12 über ein Mesh-Netzwerk miteinander verbunden sein.

Ein Gerät 12 kann beispielsweise ein Taster, ein Schalter, ein Aktor, ein Sensor, ein Zähler oder dergleichen sein oder aufweisen. Ein Gerät 12 kann beispielsweise ein Bewegungssensor, eine Türkommunikationseinheit, ein Lautsprecher, eine Lampe, eine Kamera, ein Mikrophon, ein Fernseher, ein Rauchmelder, eine Steckdose oder dergleichen sein oder aufweisen. Ein Gerät 12 kann ein elektronisches Gerät, ein Haushaltsgerät, ein Smart Home Gerät oder dergleichen sein oder aufweisen. Die aufgezählten Geräte sind lediglich beispielhaft und nicht abschließend.

Das Gebäudeautomationssystem 10 weist ein zentrales Infrastrukturgerät 14 auf. Das zentrale Infrastrukturgerät 14 kann eine Logikeinheit sein oder aufweisen. Das zentrale Infrastrukturgerät 14 kann vor Ort bzw. "on premise" vorgesehen und/oder angeordnet sein. Alternativ oder zusätzlich kann das zentrale Infrastrukturgerät 14 über ein Tunneling, beispielsweise einen VPN-Tunnel, mit einem oder mehreren Geräten 12 des Gebäudeautomationssystems verbunden sein. Beispielsweise muss das zentrale Infrastrukturgerät 14 nicht zwingend vor Ort angeordnet sein.

Das zentrale Infrastrukturgerät 14 kann über eine oder mehrere Verbindungen 41 mit mindestens einem oder allen Geräten 12 zum Datenaustausch verbunden sein. Das zentrale Infrastrukturgerät 14 kann mit mindestens einem, mehreren oder allen Geräten 12 unmittelbar und/oder direkt verbunden sein. Beispielsweise kann das zentrale Infrastrukturgerät 14 direkt mit einem oder mehreren der Geräte 12 Daten austauschen und/oder kommunizieren.

Alternativ oder zusätzlich kann das zentrale Infrastrukturgerät 14 mit mindestens einem oder mehreren der Geräte 12 indirekt verbunden sein, beispielsweise über ein weiteres Gerät 12. Beispielsweise kann das zentrale Infrastrukturgerät 14 zunächst Daten an eines der Geräte 12 senden, welche dann von diesem Gerät 12 an ein weiteres Gerät 12 weitergeleitet sein oder werden können.

Die Geräte 12 und/oder das zentrale Infrastrukturgerät 14 des Gebäudeautomationssystems 10 können über KNX miteinander verbunden sein, beispielsweise über KNX TP, KNX PL, KNX RF und/oder KNX IP. Die Offenbarung ist aber nicht darauf beschränkt. Beispielsweise kann alternativ oder zusätzlich auch LTE, narrowband-IoT, bluetooth, ZigBee, Ant+, Z-Wave der dergleichen verwendet sein oder werden. Es kann auch vorgesehen sein, dass verschiedene Verbindungen 41 zwischen verschiedenen Geräten unterschiedlich sein können. Eine Verbindung, beispielsweise eine Verbindung 41 zwischen dem zentralen Infrastrukturgerät 14 und einem Gerät 12, kann in einigen Ausführungsformen ein Tunneling umfassen und/oder über einen Tunnel, beispielsweise einen VPN-Tunnel, erfolgen.

In einigen Ausführungsformen kann mindestens ein Gerät 12 dazu eingerichtet sein, empfangene Daten an ein weiteres Gerät 12 zu kommunizieren und/oder weiterzuleiten, wie beispielsweise mit der Verbindung 45 in Figur 1 (oder die Verbindungen 45 bzw. 46 in Figur 2) angedeutet. Die Verbindung 45, und/oder die Verbindung 46, kann Merkmale einer Verbindung 41 zwischen zwei Geräten 12 aufweisen.

Die Verbindung 41, die Verbindung 45 und/oder die Verbindung 46 kann drahtlos und/oder Kabel gebunden sein. Die Verbindung 41, die Verbindung 45 und/oder die Verbindung 46 kann über einen Bus erfolgen.

Beim Aufspielen der Software auf ein oder das Gerät 12 kann eine Übertragungsrate der Software angepasst werden. Es kann vorgesehen sein, dass die Übertragungsrate derart angepasst wird, dass ein Betriebszustand des Gebäudautomationssystems 10 aufrechterhalten ist oder aufrechterhalten bleibt.

Beispielsweise kann das System 50, z.B. das zentrale Infrastrukturgerät 14 und/oder eines oder mehrere Geräte 12, dazu eingerichtet sein, die Übertragungsrate der Software beim Aufspielen der Software anzupassen.

Die Übertragungsrate der Software kann eine Übertragungsrate zwischen dem zentralen Infrastrukturgerät 14 und einem oder dem Gerät 12, und/oder zwischen zwei Geräten 12, umfassen. Eine Übertragungsrate kann eine Übertragungsrate der Software über eine Verbindung 41, 45, 46 des Gebäudeautomationssystems 10 umfassen. Die Übertragungsrate über verschiedene Verbindungen 41, 45, 46 kann unterschiedlich sein. Beispielsweise kann die Software über eine Verbindung 41, 45, 46 schneller (oder langsamer) als über eine andere Verbindung 41, 45, 46 übertragen sein oder werden.

Die Übertragungsrate kann gesteuert und/oder geregelt sein. Die Übertragungsrate kann dynamisch angepasst sein oder werden. Durch Anpassen der Übertragungsrate kann z.B. sichergestellt sein oder werden, dass ausreichend Kapazität des Netzwerks, z.B. einer Verbindung 41, 45, 46 des Gebäudautomationssystems 10, verbleiben kann, um einen Betriebszustand des Gebäudautomationssystems 10 aufrechtzuerhalten. Ein Betriebszustand kann beispielsweise ein Regelbetrieb, und/oder ein Normalbetrieb des Gebäudautomationssystems 10 sein. In einem Betriebszustand kann das Gebäudautomationssystem 10 eine oder mehrere seiner Funktionen ausführen und/oder erfüllen.

In einem Betriebszustand können Steuerbefehle, Daten, Anweisungen, Instruktionen oder dergleichen zwischen Geräten 12 des Gebäudautomationssystems 10, und/oder zwischen dem zentralen Infrastrukturgerät 14 und einem oder mehreren Geräten 12 des Gebäudautomationssystems 10, ausgetauscht oder übermittelt werden, welche z.B. zur Ausführung von Funktionen des Gebäudautomationssystems 10 dienen. Die Übertragungsrate der Software kann derart angepasst werden, dass entsprechende Steuerbefehle, Daten, Anweisungen, Instruktionen oder dergleichen über das Netzwerk, und/oder eine oder mehrere Verbindungen 41, 45, 46, auch beim Aufspielen der Software übermittelt sein oder werden können, und/oder von einem oder mehreren Geräten 12 verarbeitet sein oder werden können.

Es kann vorgesehen sein, dass die Übertragungsrate beispielsweise basierend auf einer Netzwerk-Last des Gebäudautomationssystems 10 angepasst wird. Die Netzwerk-Last des Gebäudautomationssystem 10, und/oder einer oder mehrerer Verbindungen 41, 45, 46, kann bestimmt sein oder werden, z.B. von dem zentralen Infrastrukturgerät 14 und/oder einem oder mehreren Geräten 12. Die Bestimmung der Netzwerk-Last kann wiederholt und/oder periodisch erfolgen.

Damit kann sichergestellt sein, dass beim Aufspielen der Software das Gebäudautomationssystem 10 eine oder mehrere seiner Funktionen erfüllen kann. Beispielsweise kann damit eine "down-time" oder dergleichen des Gebäudautomationssystems 10 beim Aufspielen der Software vermieden werden.

Das zentrale Infrastrukturgerät 14 kann ein Steuergerät und/oder ein Reglergerät des Gebäudeautomationssystems 10 sein oder aufweisen. Das zentrale Infrastrukturgerät 14 kann z.B. Daten oder Steuerbefehle an das oder die Geräte 12 senden. Das zentrale Infrastrukturgerät 14 kann z.B. Daten oder Steuerbefehle von einem oder mehreren der Geräte 12 empfangen. Es kann vorgesehen sein, dass ein oder der Benutzer über das zentrale Infrastrukturgerät 14 das Gebäudeautomationssystem 10 steuern, anpassen und/oder verändern kann.

Auf die Geräte 12 kann jeweils eine Software aufgespielt sein oder werden. Ein Aufspielen einer Software 20 kann beispielsweise ein Aktualisieren einer bereits vorhandenen Software umfassen. Alternativ oder zusätzlich kann ein Aufspielen einer Software 20 auch eine Neuinstallation, und/oder ein Installieren einer noch nicht installierten Software, umfassen. Die Software 20 kann eine Firmware und/oder ein Firmware-Update sein oder umfassen.

Beispielsweise kann eine Aktualisierung einer auf einem Gerät 12 installierten Software vorgesehen und/oder notwendig sein, um Sicherheitslücken der installierten Software zu schließen. Beispielsweise kann durch Aktualisieren einer Software und/oder durch eine Neuinstallation Funktionen und/oder Features ein Gerät 12 hinzugefügt sein oder werden, und/oder bereits vorhandene Funktion und/oder Features geändert sein oder werden. Ein Aktualisieren einer Software 20 kann ein Update der Software umfassen.

Die Software 20 kann gerätemodellabhängige sein. Beispielsweise kann eine bestimmte Software 20 für ein bestimmtes Gerätemodell ausgelegt sein oder werden. Beispielsweise kann eine Software 20 mit einem Gerät 12 kompatibel sein. Die Software 20 kann von einem Hersteller des Geräts 12 bereitgestellt sein oder werden.

Es kann vorgesehen sein, dass das Gebäudeautomationssystem 10 Geräte 12 verschiedener Hersteller und/oder verschiedener Gerätemodelle aufweisen kann. Beispielsweise kann eine bestimmte Software nur mit einem oder mehreren Geräten 12 des Gebäudeautomatisierungssystems kompatibel sein, mit anderen Geräten 12 des Gebäudeautomatisierungssystems 10 allerdings inkompatibel sein.

Wenn eine Software 20 aufgespielt sein oder werden soll, so kann insbesondere sichergestellt sein, dass das entsprechende Gerät 12, auf das die Software 20 aufgespielt sein oder werden soll, mit der Software 20 kompatibel ist. In einigen Fällen kann vorgesehen sein, dass die Software 20 nur auf eines oder mehrere bestimmte Geräte 12 eines mit der Software 20 kompatiblen Gerätemodells, nicht aber alle Geräte 12 eines mit der Software 20 kompatiblen Gerätemodells aufgespielt sein oder werden soll.

Alternativ oder zusätzlich kann vorgesehen sein, dass die Software 20 auf alle Geräte 12 des Gebäudeautomationssystems 10, die mit der Software kompatibel sind, aufgespielt sein oder werden können.

Es kann vorgesehen sein, dass Software auf mehrere Geräte 12 gleichzeitig aufgespielt sein oder werden kann. Es kann vorgesehen sein, dass Software für verschiedene Geräte 12 unterschiedlicher Gerätemodell gleichzeitig aufgespielt sein oder werden können.

Das zentrale Infrastrukturgerät 14 kann einen Scheduler oder dergleichen umfassen, der eine Reihenfolge und/oder einen zeitlichen Beginn einer oder mehrerer Aufspielungen umfassen kann.

In einigen Ausführungsformen kann eine Aufspielung dann erfolgen, wenn eine Netzwerklast gering ist. Es kann vorgesehen sein, dass eine laufende Aufspielung unterbrochen und/oder pausiert wird, wenn eine Netzwerklast zunimmt. Es kann vorgesehen sein, dass eine unterbrochene und/oder pausierte Aufspielung fortgesetzt wird, wenn eine Netzwerklast abnimmt.

Das zentrale Infrastrukturgerät 14 kann beispielsweise dazu eingerichtet sein, mehrere Updates und/oder Aufspielungen zu verwalten, eine oder mehrere Aufspielungen anhand des Startverhaltens auszuführen, Aufspielungen zu protokollieren und/oder Informationen über Aufspielungen und/oder über laufende Prozesse darzustellen, und/oder Aufspielungen und/oder laufende Prozesse zu pausieren, abzubrechen und/oder löschbar machen. Das zentrale Infrastrukturgerät 14 kann ein Visualisierungsserver sein oder aufweisen.

Die Software 20 kann beispielsweise über eine Verbindung 42 bereitgestellt sein oder werden. In einigen Ausführungsformen wird die Software 20 von einem Hersteller eines Geräts 12 eines entsprechenden mit der Software kompatiblen Gerätemodells bereitgestellt. In einigen Ausführungsformen kann die Software 20 von einem extern, beispielsweise von einem Server, bereitgestellt sein oder werden.

Vor dem Aufspielen werden Aufspieldaten erzeugt. Die Aufspieldaten umfassen die empfangene Software 20, sowie Konfigurationsdaten 22 der Aufspielung und Projektdaten des Gebäudeautomationssystems 10.

Die Konfigurationsdaten 22 der Aufspielung können einen Zeitpunkt des Starts der Aufspielung umfassen. Beispielsweise kann die Aufspielung zu einem bestimmten Zeitpunkt, z.B. einer bestimmten Uhrzeit, gestartet sein oder werden.

Die Konfigurationsdaten der Aufspielung umfassen eine zugelassene Netzwerk-Last beim Aufspielen der Software. Alternativ oder zusätzlich umfassen die Konfigurationsdaten 22 der Aufspielung einen Zeitpunkt eines Neustarts des Geräts 12, z.B. ob dieser sofort, manuell und/oder zeitgesteuert erfolgen soll. Alternativ oder zusätzlich umfassen die Konfigurationsdaten 22 der Aufspielung eine Auslösungsart eines Neustarts des Geräts. Die Konfigurationsdaten 22 können eine Priorität und/oder Reihenfolge eine Aufspielung der Software umfassen.

Es kann vorgesehen sein, dass die Konfigurationsdaten 22 von einem Benutzer modifiziert und/oder vorgegeben sein oder werden können. Alternativ oder zusätzlich kann eine Default-Einstellung der Konfigurationsdaten 22 vorgesehen sein. In einigen Ausführungsformen kann auch vorgesehen sein, dass die Konfigurationsdaten 22 von der Vorbereitungseinheit 16 erstellt sein oder werden können.

Die Konfigurationsdaten 22 können in Abhängigkeit des oder der Gerätemodelle, die mit der Software 20 kompatibel sind, erstellt oder gewählt sein oder werden. Alternativ oder zusätzlich können die Konfigurationsdaten 22 in Abhängigkeit des Gebäudeautomationssystems 10, z.B. in Abhängigkeit einer durchschnittlichen Netzwerklast und/oder einen zeitlichen Verlauf einer Netzwerkauslastung, erstellt oder gewählt sein oder werden.

In einigen Ausführungsformen kann vorgesehen sein, dass ein oder der Benutzer die Konfigurationsparameter 22 vor dem Aufspielen der Software und/oder vor dem Übermitteln der Aufspieldaten an das zentrale Infrastrukturgerät 14 bestätigen muss.

Das System 50 kann eine Vorbereitungseinheit 16 umfassen. Die Vorbereitungseinheit 16 kann die Software 20 empfangen. In einigen Ausführungsformen kann die Vorbereitungseinheit 16 die Konfigurationsdaten 22 empfangen. Es kann vorgesehen sein, dass die Vorbereitungseinheit 16 periodisch und/oder wiederholt abfragen kann, ob eine aktualisierte Software 20 vorliegt.

Alternativ oder zusätzlich können die Konfigurationsdaten 22 durch die Vorbereitungseinheit 16, und/oder oder mit der Vorbereitungseinheit 16, erstellt sein oder werden. In einigen Ausführungsformen kann die Vorbereitungseinheit 16 die Projektdaten des Gebäudeautomationssystems 10 empfangen, und/oder vorliegen haben. Die Vorbereitungseinheit 16 kann beispielsweise eine geeignete Anwendung 18, z.B. ein ETS-Programm (Engineering Tool Software), ausführen. In einigen Ausführungsformen kann die Vorbereitungseinheit 16 alternativ oder als Anwendung 18 implementiert sein, beispielsweise als Programm oder Software.

Die Vorbereitungseinheit 16 kann die Aufspieldaten beispielsweise anhand von Vorgaben erzeugen. In einigen Ausführungsformen kann die Vorbereitungseinheit 16 beispielsweise prüfen und/oder erfassen, welche Geräte 12 des Gebäudeautomationssystems 10 mit einer empfangene Software 20 kompatibel sind.

Die Vorbereitungseinheit 16 kann eine externe Vorrichtung sein oder aufweisen. Beispielsweise kann die Vorbereitungseinheit 16 ein oder das externe Gerät 30 sein oder aufweisen. Die Vorbereitungseinheit 16 kann ein Mobilgerät, z.B. ein Laptop, ein Smartphone, ein Tablet oder dergleichen, sein oder aufweisen. Die Vorbereitungseinheit 16 kann alternativ oder zusätzlich ein Server sein oder aufweisen. In einigen Ausführungsformen kann alternativ oder zusätzlich vorgesehen sein, dass das zentrale Infrastrukturgerät 14 die Vorbereitungseinheit 16 ist oder aufweist. In einigen Ausführungsformen kann die Vorbereitungseinheit 16 alternativ oder zusätzlich eine Anwendung 18 sein oder umfassen, und/oder als Anwendung 18 implementiert sein.

Es kann vorgesehen sein, dass die Anwendung 18 einen oder den Aufspielvorgang überwachen, steuern und/oder entsprechende Informationen abrufen kann. Alternativ oder zusätzlich kann vorgesehen sein, dass ein oder der Benutzer auf die Vorbereitungseinheit 16 zugreifen kann.

Die erzeugten Aufspieldaten können an das zentrale Infrastrukturgerät 14 übermittelt sein oder werden. Beispielsweise kann die Vorbereitungseinheit 16 über eine Verbindung 40 mit dem zentralen Infrastrukturgerät 14 kommunizieren.

Die Verbindung 40 kann beispielsweise TCP umfassen. Die Verbindung 40 kann alternativ oder zusätzlich KNX umfassen.

In einigen Ausführungsformen kann alternativ oder zusätzlich vorgesehen sein, dass das zentrale Infrastrukturgerät 14 die Vorbereitungseinheit 16 umfassen kann, und/oder das das zentrale Infrastrukturgerät 14 die Aufspieldaten erzeugen kann.

Entsprechend der Aufspieldaten kann das zentrale Infrastrukturgerät 14 die Software 20 anhand der Konfigurationsdaten 22 und/oder der Projektdaten des Gebäudeautomationssystems 10 auf einen oder mehrere vorgesehene Geräte 12 aufspielen.

In einigen Ausführungsformen kann vorgesehen sein, dass das zentrale Infrastrukturgerät 14 mit einem externen Gerät 30 kommunizieren und/oder Daten austauschen kann, beispielsweise über eine Verbindung 44. Das externe Gerät 30 kann beispielsweise ein Mobilgerät sein oder aufweisen.

Die Verbindung 44 kann drahtlos und/oder Kabel gebunden sein. Beispielsweise kann eine Datenübertragung zwischen dem externen Gerät 30 und der zentralen Infrastrukturgerät 40 über Internet, WLAN, NFC, LTE, narrowband-IoT, bluetooth, ZigBee, Ant+, Z-Wave oder dergleichen erfolgen.

Es kann vorgesehen sein, dass ein oder der Benutzer über das externe Gerät 30 Zugriff auf das Gebäudeautomationssystem 10 haben kann. Beispielsweise kann das externe Gerät 30 Steuerbefehle an das Gebäudeautomationssystem 10, und/oder das zentrale Infrastrukturgerät 14, übermitteln. In einigen Ausführungsformen kann das externe Gerät 30 einen oder mehrere Parameter eines oder mehrere Geräte 12 ändern.

Es kann vorgesehen sein, dass über das externe Gerät 30 ein oder der Benutzer Informationen über einen Zustand und/oder Status des Gebäudeautomationssystems 10, und/oder einer Aufspielung, erhalten kann. Es kann vorgesehen sein, dass das zentrale Infrastrukturgerät 14 Informationen und/oder Daten an das externe Gerät 30 übermitteln kann.

Das externe Gerät 30 kann dazu eingerichtet sein, eine App auszuführen. Die App kann eine Steuerung und/oder eine Darstellung des Gebäudeautomationssystems 10, sowie eine Anzeige von Informationen des Gebäudeautomationssystems 10, ermöglichen. In einigen Ausführungsformen kann die App dazu eingerichtet sein, die Konfigurationsdaten 22 zu erzeugen, anzuzeigen und/oder zu bestätigen. In einigen Ausführungsformen kann vorgesehen sein, dass das externe Gerät 30 die Vorbereitungseinheit 16 umfasst.

Figur 2 zeigt ein weiteres Ausführungsbeispiel eines offenbarungsgemäßen Systems 50. Das in Figur 2 gezeigte oder mit Bezug zu Figur 2 beschriebene Ausführungsbeispiel kann eines, mehrere oder alle Merkmale des in Figur 1 gezeigten und/oder mit Bezug zu Figur 1 beschriebenen Ausführungsbeispiels und/oder eines offenbarungsgemäßen Ausführungsbeispiels aufweisen. Das in Figur 2 gezeigte oder mit Bezug zu Figur 2 beschriebene Ausführungsbeispiel kann einen, mehrere oder alle Vorteile des in Figur 1 gezeigten und/oder mit Bezug zu Figur 1 beschriebenen Ausführungsbeispiele und/oder eines offenbarungsgemäßen Ausführungsbeispiels aufweisen.

In einigen Ausführungsformen kann die Software 20 als oder in einem Software-Container bereitgestellt sein oder werden. In einigen Ausführungsformen kann die Software 20 eines oder mehrere binaries umfassen. In einigen Ausführungen kann die Software 20 in Form eines komprimierten Archivs bereitgestellt sein oder werden.

Es kann vorgesehen sein, dass die Vorbereitungseinheit 16 eine Anwendung 18, z.B. eine ETS-Software und/oder eine ETS-Anwendung (ETS-App) umfasst und/oder ausführen kann. In einigen Ausführungsformen können die Aufspieldaten durch die Anwendung 18, z.B. die ETS-Software und/oder die ETS-Anwendung, erzeugt sein oder werden. In einigen Ausführungsformen können die Ausführungsdaten XML basiert sein, und/oder zumindest teilweise oder vollständig eine XML-Struktur haben.

In einigen Ausführungsformen können die Aufspieldaten in Form eines Byte-Streams an das zentrale Logikgerät 14 von der Vorbereitungseinheit 16 übermittelt sein oder werden. Dadurch kann sich eine schnelle Übertragung der Aufspieldaten ergeben. Die Aufspieldaten können z.B. über TCP oder KNX übertragen werden.

Es kann vorgesehen sein, dass Vorbereitungseinheit 16, z.B. die Anwendung 18, die ETS-Software und/oder die ETS-Anwendung, auf die Projektdaten zugreifen kann. Beispielsweise können die Projektdaten der Vorbereitungseinheit 16, z.B. der Anwendung 18, der ETS-Software und/oder der ETS-Anwendung, bereitgestellt sein oder werden. Alternativ oder zusätzlich kann bei der Erstellung der die Projektdaten die Vorbereitungseinheit 16, z.B. die Anwendung 18, die ETS-Software und/oder die ETS-Anwendung, verwendet worden sein, und/oder die Projektdaten der Vorbereitungseinheit 16, z.B. der Anwendung 18, der ETS-Software und/oder der ETS-Anwendung, bei Erzeugung der Aufspieldaten bereits vorliegen.

In einigen Ausführungsformen können die Proj ektdaten Adressen der Geräte 12 umfassen, Die Projektdaten können einen Toolkey eines, mehrerer oder aller Geräte 12 umfassen. Ein Toolkey kann ein Sicherheitsschlüssel sein oder umfassen, der zum Zugriff auf ein entsprechendes Gerät 12, und/oder zur Kommunikation mit einem entsprechenden Gerät 12, notwendig sein kann.

In einigen Ausführungsformen kann das zentrale Infrastrukturgerät 14 ein Logikbaustein, beispielsweise ein X1-Logikgerät, sein oder aufweisen.

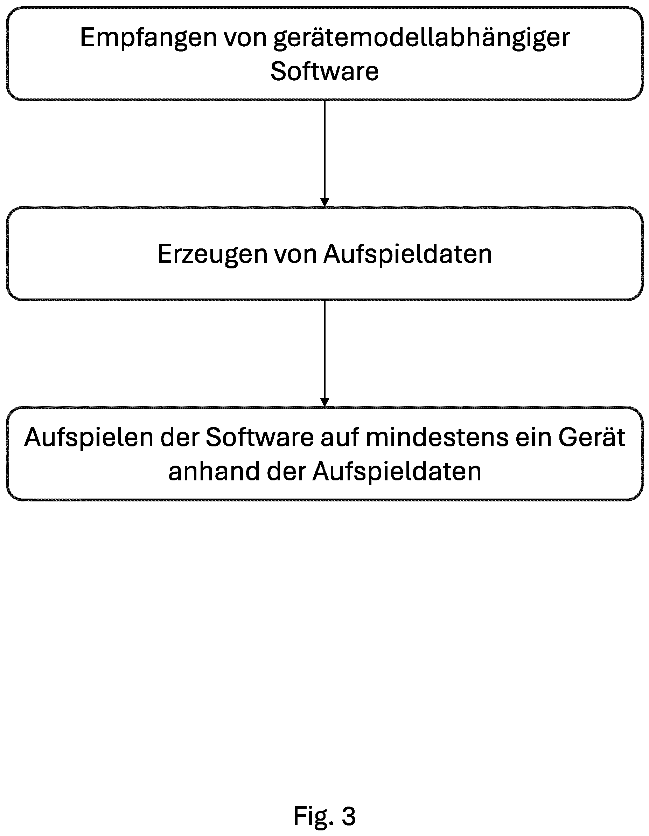

Figur 3 zeigt ein Ablaufdiagramm einer beispielhaften Ausführungsform eines Verfahrens gemäß einem Aspekt der Offenbarung.

Das Verfahren kann eines, mehrere oder alle Merkmale eines offenbarten Verfahrens aufweisen. Das Verfahren kann eines, mehrere oder alle Merkmale der mit Bezug zu Figur 1 und/oder Figur 2 beschriebenen und/oder gezeigten Ausführungsformen aufweisen. Das Verfahren kann einen, mehrere oder alle Vorteile eines offenbarten Verfahrens aufweisen. Das Verfahren kann einen, mehrere oder alle Vorteile der mit Bezug zu Figur 1 und/oder Figur 2 beschriebenen und/oder gezeigten Ausführungsformen aufweisen. Das Verfahren kann mindestens einen oder mehrere weitere oder zusätzliche Schritte umfassen.

Das Verfahren umfasst ein Empfangen einer gerätemodellabhängiger Software 20. Die Software 20 kann beispielsweise von einem Hersteller eines Geräts eines entsprechenden Gerätemodells bereitgestellt sein oder werden. Die gerätemodellabhängige Software kann zum Aufspielen auf mindestens ein Gerät eines mit der Software kompatiblen Gerätemodells der Gebäudeautomationssystems vorgesehen sein.

Das Verfahren umfasst weiter ein Erzeugen von Aufspieldaten. Die Aufspieldaten können die empfangene Software, Projektdaten des Gebäudeautomationssystems 10 und Konfigurationsdaten der Aufspielung umfassen.

Das Verfahren umfasst weiter ein Aufspielen der Software auf mindestens ein Gerät anhand der Aufspieldaten. Die Aufspielung kann durch ein mit dem Gerät verbundenes zentrales Infrastrukturgerät erfolgen. Das zentrale Infrastrukturgerät kann ein Gerät des Gebäudeautomationssystems sein. Das zentrale Infrastrukturgerät kann eine Logikeinheit des Gebäudeautomationssystems sein oder aufweisen.

### Bezugszeichenliste

- 10: Gebäudeautomationssystem
- 12: Gerät
- 14: zentrales Infrastrukturgerät
- 16: Vorbereitungseinheit
- 18: Anwendung
- 20: Software
- 22: Konfigurationsdaten
- 30: externes Gerät
- 40: Verbindung
- 41: Verbindung
- 42: Verbindung
- 43: Verbindung
- 44: Verbindung
- 45: Verbindung
- 46: Verbindung
- 50: System

## Patentansprüche

1. Verfahren zum Aufspielen einer Software auf mindestens ein Gerät (12) eines Gebäudeautomationssystems (10), beispielsweise eines Türkommunikationssystems, wobei das Verfahren umfasst:
Empfangen einer gerätemodellabhängigen Software (20) zum Aufspielen auf mindestens ein Gerät (12) eines mit der Software kompatiblen Gerätemodells, wobei bevorzugt die Software (20) aktualisierte Firmwaredaten umfasst;
Erzeugen von Aufspieldaten, wobei die Aufspieldaten die empfangene Software (20), Projektdaten des Gebäudeautomationssystems (10) und Konfigurationsdaten (22) der Aufspielung umfassen; und
Aufspielen der Software (20) auf mindestens ein Gerät (12) eines mit der Software kompatiblen Gerätemodells durch ein mit dem Gerät verbundenes zentrales Infrastrukturgerät (14) des Gebäudeautomationssystems anhand der Aufspieldaten, wobei das zentrale Infrastrukturgerät (14) bevorzugt eine zentrale Logikeinheit des Gebäudeautomationssystems (10) ist oder aufweist,
**dadurch gekennzeichnet, dass** die Konfigurationsdaten (22) der Aufspielung eines oder mehrere aus einer zugelassenen Netzwerk-Last beim Aufspielen der Software, einem Zeitpunkt eines Neustarts des Geräts (12) und/oder einer Auslösungsart eines Neustarts des Geräts (12) umfassen.

2. Verfahren nach Anspruch 1, wobei beim Aufspielen der Software auf das Gerät eine Übertragungsrate angepasst wird, bevorzugt derart, dass ein Betriebszustand des Gebäudautomationssystems aufrechterhalten ist.

3. Verfahren nach einem der vorhergehenden Ansprüche, bei dem die Projektdaten des Gebäudeautomationssystems (10) eines oder mehrere aus Gebäudedaten, eindeutigen Adressen, Parameter, Multicast-Adressen, Logikfunktionen, Gerätemodell, und/oder Gerätetyp der Geräte (12) des Gebäudeautomationssystems (10) umfassen, und/oder eine Topologie des Gebäudeautomationssystems (10) umfassen.

4. Verfahren nach einem der vorhergehenden Ansprüche, bei dem die gerätemodellabhängige Software von einer Vorbereitungseinheit (16) und/oder dem zentralen Infrastrukturgerät (14) empfangen wird, und/oder wobei die Aufspieldaten von der Vorbereitungseinheit (16) und/oder dem zentralen Infrastrukturgerät (14) erzeugt werden.

5. Verfahren nach einem der vorhergehenden Ansprüche, bei dem die Aufspieldaten an das zentrale Infrastrukturgerät (14) übermittelt werden, bevorzugt über TCP oder KNX.

6. Verfahren nach einem der vorhergehenden Ansprüche, bei dem beim Aufspielen der Software (20) die Software auf alle Geräte (12) des Gebäudeautomationssystem (10), die mit der Software kompatibel sind, aufgespielt wird.

7. Verfahren nach einem der vorhergehenden Ansprüche, bei dem das zentrale Infrastrukturgerät (14) eine Aufspielung der Software pausieren, fortsetzen, abbrechen, löschen und/oder rückgängig machen kann, und/oder bei dem das zentrale Infrastrukturgerät (14) die Aufspieldaten und/oder die Aufspielung protokolliert.

8. Verfahren nach einem der vorhergehenden Ansprüche, bei dem das zentrale Infrastrukturgerät (14) einen Steuerbefehl von einem externen Gerät (30) empfängt und basierend darauf die Aufspielung startet, pausiert, fortsetzt, abbricht, und/oder rückgängig macht, und/oder wobei das zentrale Infrastrukturgerät (14) eine oder mehrere Informationen der Aufspielung, bevorzugt eines oder mehrere aus einem Status einer Aufspielung, einen Zustand einer Aufspielung und/oder einen Versionsverlauf der Software, an ein oder das externe Gerät (30) übermittelt.

9. System (50), aufweisend ein Gebäudeautomationssystem (10), beispielsweise ein Türkommunikationssystem, wobei das System (50) dazu eingerichtet ist, eine Software auf mindestens ein Gerät (12) des Gebäudeautomationssystem (10) aufzuspielen, wobei das System (50) weiter dazu eingerichtet ist:
eine gerätemodellabhängige Software (20) zum Aufspielen auf mindestens ein Gerät (12) eines mit der Software kompatiblen Gerätemodells zu empfangen, wobei bevorzugt die Software aktualisierte Firmwaredaten umfasst;
Aufspieldaten zu erzeugen, wobei die Aufspieldaten die empfangene Software, Projektdaten des Gebäudeautomationssystems (10) und Konfigurationsdaten (22) der Aufspielung umfassen; und
die Software auf mindestens ein Gerät (12) eines mit der Software kompatiblen Gerätemodells durch ein mit dem Gerät (12) verbundenes zentrales Infrastrukturgerät (14) des Gebäudeautomationssystems (10) anhand der vorbereiteten Aufspieldaten aufzuspielen, wobei das zentrale Infrastrukturgerät bevorzugt eine zentrale Logikeinheit des Gebäudeautomationssystems ist oder aufweist,
**dadurch gekennzeichnet, dass** die Konfigurationsdaten (22) der Aufspielung eines oder mehre aus einer zugelassene Netzwerk-Last beim Aufspielen der Software, einem Zeitpunkt eines Neustarts des Geräts (12) und/oder einer Auslösungsart eines Neustarts des Geräts (12) umfassen.

10. System (50) nach Anspruch 9, bei dem die Projektdaten des Gebäudeautomationssystems (10) eines oder mehrere aus Gebäudedaten, eindeutigen Adressen, Parameter, Multicast-Adressen, Logikfunktionen, Gerätemodell, und/oder Gerätetyp der Geräte (12) des Gebäudeautomationssystems (10) umfassen, und/oder bei dem die Projektdaten des Gebäudeautomationssystems (10) eine Topologie des Gebäudeautomationssystems (10) umfassen.

11. System (50) nach Anspruch 9 oder 10, das dazu eingerichtet ist, beim Aufspielen der Software die Software auf alle Geräte (12) des Gebäudeautomationssystem (10), die mit der Software kompatibel sind, aufzuspielen.

12. System (50) nach einem der Ansprüche 9 bis 11, das eine Vorbereitungseinheit (16) aufweist, die dazu eingerichtet ist, die gerätemodellabhängige Software (20) zu empfangen und/oder die Aufspieldaten zu erzeugen, und/oder wobei das zentrale Infrastrukturgerät (14) dazu eingerichtet ist, die gerätemodellabhängige Software (20) zu empfangen und/oder die Aufspieldaten zu erzeugen.

13. System (50) nach einem der Ansprüche 9 bis 12, bei dem bei dem das zentrale Infrastrukturgerät (14) dazu eingerichtet ist, eine Aufspielung der Software zu pausieren, fortzusetzen, abzubrechen, zu löschen und/oder rückgängig zu machen, und/oder bei dem das zentrale Infrastrukturgerät (14) dazu eingerichtet ist, die Aufspieldaten und/oder die Aufspielung zu protokollieren.

14. System (50) nach einem der Ansprüche 9 bis 13, das dazu eingerichtet ist, einen Steuerbefehl von einem externen Gerät (30) zu empfangen und basierend darauf die Aufspielung zu starten, zu pausieren, fortzusetzen, abzubrechen, und/oder rückgängig zu machen, und/oder wobei das System dazu eingerichtet ist, eine Information einer Aufspielung, bevorzugt eines oder mehrere aus einem Status einer Aufspielung, einem Zustand einer Aufspielung und/oder einem Versionsverlauf der Software, an ein oder das externe Gerät (30) zu übermitteln.

## Claims

1. A method for playing software on at least one device (12) of a building automation system (10), for example a door communication system, the method comprising:
receiving device model-dependent software (20) for playing on at least one device (12) of a device model compatible with the software, the software (20) preferably comprising updated firmware data;
generating play-on data, the play-on data comprising the received software (20), project data of the building automation system (10) and configuration data (22) of the play-on; and
playing the software (20) on at least one device (12) of a device model compatible with the software by a central infrastructure device (14) of the building automation system connected to the device on the basis of the play-on data, the central infrastructure device (14) preferably being or comprising a central logic unit of the building automation system (10),
**characterized in that** the configuration data (22) of the play-on comprise one or more of an approved network load when playing the software, a time of a restart of the device (12) and/or a triggering type of a restart of the device (12).

2. The method according to claim 1, wherein when playing the software on the device, a transmission rate is adjusted, preferably such that an operating state of the building automation system is maintained.

3. The method according to any one of the preceding claims, in which the project data of the building automation system (10) comprise one or more of building data, unique addresses, parameters, multicast addresses, logic functions, device model, and/or device type of the devices (12) of the building automation system (10), and/or comprise a topology of the building automation system (10).

4. The method according to any one of the preceding claims, in which the device model-dependent software is received by a preparation unit (16) and/or the central infrastructure device (14), and/or wherein the play-on data are generated by the preparation unit (16) and/or the central infrastructure device (14).

5. The method according to any one of the preceding claims, in which the play-on data are transmitted to the central infrastructure device (14), preferably via TCP or KNX.

6. The method according to any one of the preceding claims, in which when playing the software (20), the software is played on all devices (12) of the building automation system (10) that are compatible with the software.

7. The method according to any one of the preceding claims, in which the central infrastructure device (14) can pause, continue, abort, delete and/or reverse a play-on of the software, and/or in which the central infrastructure device (14) logs the play-on data and/or the play-on.

8. The method according to any one of the preceding claims, in which the central infrastructure device (14) receives a control command from an external device (30) and, based thereon, starts, pauses, continues, aborts and/or reverses the play-on, and/or wherein the central infrastructure device (14) transmits one or more pieces of information of the play-on, preferably one or more of a status of a play-on, a state of a play-on and/or a version history of the software, to a or the external device (30).

9. A system (50) comprising a building automation system (10), for example a door communication system, the system (50) being configured to play software on at least one device (12) of the building automation system (10), the system (50) being further configured to:
receive device model-dependent software (20) for playing on at least one device (12) of a device model compatible with the software, the software preferably comprising updated firmware data;
generate play-on data, the play-on data comprising the received software, project data of the building automation system (10) and configuration data (22) of the play-on; and
play the software on at least one device (12) of a device model compatible with the software by a central infrastructure device (14) of the building automation system (10) connected to the device (12) on the basis of the prepared play-on data, the central infrastructure device preferably being or comprising a central logic unit of the building automation system,
**characterized in that** the configuration data (22) of the play-on comprise one or more of an approved network load when playing the software, a time of a restart of the device (12) and/or a triggering type of a restart of the device (12).

10. The system (50) according to claim 9, in which the project data of the building automation system (10) comprise one or more of building data, unique addresses, parameters, multicast addresses, logic functions, device model, and/or device type of the devices (12) of the building automation system (10), and/or in which the project data of the building automation system (10) comprise a topology of the building automation system (10).

11. The system (50) according to claim 9 or 10, which is configured to play the software on all devices (12) of the building automation system (10) that are compatible with the software when playing the software.

12. The system (50) according to any one of claims 9 to 11, which comprises a preparation unit (16) configured to receive the device model-dependent software (20) and/or to generate the play-on data, and/or wherein the central infrastructure device (14) is configured to receive the device model-dependent software (20) and/or to generate the play-on data.

13. The system (50) according to any one of claims 9 to 12, in which the central infrastructure device (14) is configured to pause, continue, abort, delete and/or reverse a play-on of the software, and/or in which the central infrastructure device (14) is configured to log the play-on data and/or the play-on.

14. The system (50) according to any one of claims 9 to 13, which is configured to receive a control command from an external device (30) and, based thereon, to start, pause, continue, abort and/or reverse the play-on, and/or wherein the system is configured to transmit information of a play-on, preferably one or more of a status of a play-on, a state of a play-on and/or a version history of the software, to a or the external device (30).

## Revendications

1. Procédé de chargement d'un logiciel sur au moins un appareil (12) d'un système d'automatisation de bâtiment (10), par exemple d'un système de communication de porte, le procédé comprenant :
la réception d'un logiciel (20) dépendant d'un modèle d'appareil pour le chargement sur au moins un appareil (12) d'un modèle d'appareil compatible avec le logiciel, le logiciel (20) comprenant de préférence des données de micrologiciel mises à jour ;
la génération de données de chargement, les données de chargement comprenant le logiciel (20) reçu, des données de projet du système d'automatisation de bâtiment (10) et des données de configuration (22) du chargement ; et
le chargement du logiciel (20) sur au moins un appareil (12) d'un modèle d'appareil compatible avec le logiciel par un appareil d'infrastructure central (14) du système d'automatisation de bâtiment relié à l'appareil à l'aide des données de chargement, l'appareil d'infrastructure central (14) étant ou présentant de préférence une unité logique centrale du système d'automatisation de bâtiment (10),
**caractérisé en ce que** les données de configuration (22) du chargement comprennent un ou plusieurs éléments parmi une charge de réseau autorisée lors du chargement du logiciel, un moment d'un redémarrage de l'appareil (12) et/ou un type de déclenchement d'un redémarrage de l'appareil (12).

2. Procédé selon la revendication 1, dans lequel, lors du chargement du logiciel sur l'appareil, un débit de transmission est adapté, de préférence de telle sorte qu'un état de fonctionnement du système d'automatisation de bâtiment est maintenu.

3. Procédé selon l'une quelconque des revendications précédentes, dans lequel les données de projet du système d'automatisation de bâtiment (10) comprennent un ou plusieurs éléments parmi des données de bâtiment, des adresses uniques, des paramètres, des adresses de multidiffusion, des fonctions logiques, un modèle d'appareil et/ou un type d'appareil des appareils (12) du système d'automatisation de bâtiment (10), et/ou comprennent une topologie du système d'automatisation de bâtiment (10).

4. Procédé selon l'une quelconque des revendications précédentes, dans lequel le logiciel dépendant du modèle d'appareil est reçu par une unité de préparation (16) et/ou l'appareil d'infrastructure central (14), et/ou dans lequel les données de chargement sont générées par l'unité de préparation (16) et/ou l'appareil d'infrastructure central (14).

5. Procédé selon l'une quelconque des revendications précédentes, dans lequel les données de chargement sont transmises à l'appareil d'infrastructure central (14), de préférence par TCP ou KNX.

6. Procédé selon l'une quelconque des revendications précédentes, dans lequel, lors du chargement du logiciel (20), le logiciel est chargé sur tous les appareils (12) du système d'automatisation de bâtiment (10) qui sont compatibles avec le logiciel.

7. Procédé selon l'une quelconque des revendications précédentes, dans lequel l'appareil d'infrastructure central (14) peut mettre en pause, poursuivre, interrompre, supprimer et/ou annuler un chargement du logiciel, et/ou dans lequel l'appareil d'infrastructure central (14) enregistre les données de chargement et/ou le chargement.

8. Procédé selon l'une quelconque des revendications précédentes,dans lequel l'appareil d'infrastructure central (14) reçoit une instruction de commande d'un appareil externe (30) et, sur la base de celle-ci, démarre, met en pause, poursuit, interrompt et/ou annule le chargement, et/ou dans lequel l'appareil d'infrastructure central (14) transmet une ou plusieurs informations du chargement, de préférence un ou plusieurs éléments parmi un statut d'un chargement, un état d'un chargement et/ou un historique de version du logiciel, à un ou à l'appareil externe (30).

9. Système (50), présentant un système d'automatisation de bâtiment (10), par exemple un système de communication de porte, le système (50) étant conçu pour charger un logiciel sur au moins un appareil (12) du système d'automatisation de bâtiment (10), le système (50) étant en outre conçu pour :
recevoir un logiciel (20) dépendant d'un modèle d'appareil pour le chargement sur au moins un appareil (12) d'un modèle d'appareil compatible avec le logiciel, le logiciel comprenant de préférence des données de micrologiciel mises à jour ;
générer des données de chargement, les données de chargement comprenant le logiciel reçu, des données de projet du système d'automatisation de bâtiment (10) et des données de configuration (22) du chargement ; et
charger le logiciel sur au moins un appareil (12) d'un modèle d'appareil compatible avec le logiciel par un appareil d'infrastructure central (14) du système d'automatisation de bâtiment (10) relié à l'appareil (12) à l'aide des données de chargement préparées, l'appareil d'infrastructure central étant ou présentant de préférence une unité logique centrale du système d'automatisation de bâtiment,
**caractérisé en ce que** les données de configuration (22) du chargement comprennent un ou plusieurs éléments parmi une charge de réseau autorisée lors du chargement du logiciel, un moment d'un redémarrage de l'appareil (12) et/ou un type de déclenchement d'un redémarrage de l'appareil (12).

10. Système (50) selon la revendication 9, dans lequel les données de projet du système d'automatisation de bâtiment (10) comprennent un ou plusieurs éléments parmi des données de bâtiment, des adresses uniques, des paramètres, des adresses de multidiffusion, des fonctions logiques, un modèle d'appareil et/ou un type d'appareil des appareils (12) du système d'automatisation de bâtiment (10), et/ou dans lequel les données de projet du système d'automatisation de bâtiment (10) comprennent une topologie du système d'automatisation de bâtiment (10).

11. Système (50) selon la revendication 9 ou 10, qui est conçu pour, lors du chargement du logiciel, charger le logiciel sur tous les appareils (12) du système d'automatisation de bâtiment (10) qui sont compatibles avec le logiciel.

12. Système (50) selon l'une quelconque des revendications 9 à 11, qui présente une unité de préparation (16) qui est conçue pour recevoir le logiciel (20) dépendant du modèle d'appareil et/ou pour générer les données de chargement, et/ou dans lequel l'appareil d'infrastructure central (14) est conçu pour recevoir le logiciel (20) dépendant du modèle d'appareil et/ou pour générer les données de chargement.

13. Système (50) selon l'une quelconque des revendications 9 à 12, dans lequel l'appareil d'infrastructure central (14) est conçu pour mettre en pause, poursuivre, interrompre, supprimer et/ou annuler un chargement du logiciel, et/ou dans lequel l'appareil d'infrastructure central (14) est conçu pour enregistrer les données de chargement et/ou le chargement.

14. Système (50) selon l'une quelconque des revendications 9 à 13, qui est conçu pour recevoir une instruction de commande d'un appareil externe (30) et, sur la base de celle-ci, démarrer, mettre en pause, poursuivre, interrompre et/ou annuler le chargement, et/ou dans lequel le système est conçu pour transmettre une information d'un chargement, de préférence un ou plusieurs éléments parmi un statut d'un chargement, un état d'un chargement et/ou un historique de version du logiciel, à un ou à l'appareil externe (30).
